# EUROPEAN PATENT APPLICATION

(11) **EP 4 661 116 A2**
(43) Date of publication of application: **10.12.2025**
(21) Application number: 25175029.5
(22) Date of filing: 08.05.2025
(51) Int. Cl.: H01M 4/66, H01M 50/586, H01M 10/0525, H01M 4/02

(54) **ELECTRODE SHEET AND ELECTROCHEMICAL DEVICE INCLUDING THE SAME, AND ELECTRONIC DEVICE**

(30) Priority: 06.06.2024 CN 202410732687
(71) Applicant: AESC Japan Ltd., Yokohama-Shi, Kanagawa 220-0012 (JP)
(72) Inventor: GE, Yuqiang, Jiangyin City, Wuxi City, 214443 (CN); LUO, Xinyi, Jiangyin City, Wuxi City, 214443 (CN); GONG, Zhijie, Jiangyin City, Wuxi City, 214443 (CN)
(74) Representative: Becker, Eberhard

(57) **Abstract**

Disclosed are an electrode sheet and an electrochemical device including the same and an electronic device. The electrode sheet includes: a current collector; a tab, disposed on at least one end of the current collector; an active substance layer, disposed on at least one surface of the current collector; an insulation layer, the insulation layer at least partially covers an area of the at least one surface of the current collector that is not covered by the active substance layer; the insulation layer includes an inorganic filler and a binder; the binder includes a first binder and a second binder, the second binder includes fluorine-containing polymer, the mass ratio of the first binder to the second binder is 1:(0.1-4).

## Description

### BACKGROUND

### Technical Field

The present disclosure relates to an electrode sheet and an electrochemical device including the same and an electronic device.

### Description of Related Art

With the rapid development of electric vehicles and energy storage systems, lithium-ion batteries, as efficient and reliable energy storage devices, have been widely utilized. Lithium-ion batteries generally include positive electrode sheets, negative electrode sheets, separators, electrolyte, and casings. The positive electrode sheets, negative electrode sheets, and separators are stacked or wound to form an electrode assembly, which is subsequently placed into the casing, filled with electrolyte, and then hermetically sealed. During the manufacturing process of lithium-ion batteries, the cutting of electrode sheets is inevitable. The electrode sheets consist of current collectors, tabs, and active substance layers. Current collectors are typically made of copper foil, aluminum foil, or stainless steel foil. These metal foils are affected by their inherent mechanical properties and the condition of cutting equipment during the cutting process. The positive electrode sheet is a critical ingredient of lithium-ion batteries, providing the function of intercalation/deintercalation of lithium ions. However, the positive electrode sheet is susceptible to influences during processing and to the effects of electrolyte during battery cycling, which might lead to battery performance degradation and pose potential safety hazards.

### SUMMARY

The present disclosure, in order to overcome the above technical problems in the existing technology, provides an electrode sheet and an electrochemical device including the same and an electronic device. The insulation layer in this electrode sheet has good adhesion, excellent electrolyte performance, and the electrode sheet has excellent flexibility, which may reduce the adverse effects on the electrode sheet during processing and the adverse effects from the electrolyte during battery cycling. The electrochemical device (especially lithium-ion battery) using the electrode sheet of the present disclosure has good safety performance.

To achieve the above objectives, the present disclosure adopts the following technical solutions.

In the first aspect, the present disclosure provides an electrode sheet, which includes: a current collector; a tab, disposed on at least one end of the current collector; an active substance layer, disposed on at least one surface of the current collector; an insulation layer, the insulation layer at least partially covers an area of the at least one surface of the current collector that is not covered by the active substance layer; the insulation layer includes an inorganic filler and a binder; the binder includes a first binder and a second binder, the second binder includes fluorine-containing polymer, the mass ratio of the first binder to the second binder is 1:(0.1-4).

In the second aspect, the present disclosure provides an electrochemical device, which includes the electrode sheet as described above.

In the third aspect, the present disclosure provides an electronic device, which includes the electrochemical device as described above.

The positive progressive effects of the present disclosure lie in:

The insulation layer of the present disclosure adopts two types of binders with different mass ratios and inorganic filler. The insulation layer in the electrode sheet formed by the synergistic effect of the two binders and inorganic filler has good adhesion, excellent resistance to electrolyte, and exceptional flexibility, which may reduce the adverse effects on the electrode sheet during processing and the adverse effects from the electrolyte during battery cycling. The electrochemical device (especially lithium-ion battery) using the electrode sheet of the present disclosure has good safety performance. In addition, the electrode sheet of the present disclosure has low preparation cost and can be widely applied in industrial production.

### DESCRIPTION OF THE EMBODIMENTS

In the existing technology, inorganic filler slurry is coated on the tab side of the current collector to form an insulation layer at the edge of the positive electrode sheet. However, in the existing technology, using this type of insulation layer often presents safety issues, mainly in the following three aspects: (1) The insulation layer has poor adhesion and is easily detached after processing, reducing production yield and posing safety hazards; (2) The insulation layer has poor resistance to electrolyte, and after the electrode sheet is assembled into a battery, the insulation layer is likely to separate from the current collector, losing its main function and posing safety hazards; (3) The insulation layer has poor flexibility, which may cause cracks or fractures during die-cutting, bending, vibration and other treatments, reducing production yield. After the electrode sheet is assembled into a battery, with the cycling process of the battery, the volume change of the electrode will apply mechanical stress, and the insulation layer with poor flexibility is easily damaged, producing cracks or fractures, causing the current collector to burst open or even break, posing safety hazards. Therefore, it is urgent to solve the above technical problems simultaneously.

### Electronic Device

The electronic device may be a vehicle, mobile phone, portable device, laptop, ship, spacecraft, electric toy and electric tool, etc. The vehicle may be a fuel automobile, gas automobile or new energy vehicle, the new energy vehicle may be a pure electric vehicle, hybrid vehicle or range-extended vehicle, etc.; spacecraft includes aircraft, rocket, space shuttle and spaceship, etc.; electric toys include fixed or mobile electric toys, for example, game console, electric car toy, electric ship toy and electric aircraft toy, etc.; electric tools include metal cutting electric tools, grinding electric tools, assembly electric tools and railway electric tools, for example, electric drill, electric grinder, electric wrench, electric screwdriver, electric hammer, impact electric drill, concrete vibrator and electric planer, etc. It can also be an energy storage electronic device that stores energy and then discharges externally. The present disclosure does not impose special limitations on the above electronic devices.

The electronic device may include: a device body and an electrochemical device. The device body may include an electrochemical device compartment. The electrochemical device is disposed in the electrochemical device compartment and electrically connected with the device body, for example, a power supply interface may be disposed in the electrochemical device compartment, and the electrochemical device may be connected with the power supply interface.

### Electrochemical Device

In the present disclosure, the electrochemical device may generally be a conventional device including electrode sheets in the field, such as batteries, capacitors, etc.

The battery may be a primary battery, or may be a secondary battery. A primary battery refers to a battery that cannot be recharged and reused after discharge, and a secondary battery refers to a battery cell that can be used continuously after discharge by activating the active material through charging. The battery may include one or more battery cells to provide a single physical module with higher voltage and capacity. When there are multiple battery cells, the multiple battery cells are connected in series, parallel, or a combination of series-parallel connection through a busbar component. The battery may be a lithium-ion battery, sodium-ion battery, sodium-lithium-ion battery, lithium metal battery, sodium metal battery, lithium-sulfur battery, magnesium-ion battery, nickel-hydrogen battery, nickel-cadmium battery, lead-acid battery, etc. The present disclosure provides no limitation thereto.

In some implementation schemes, the electrochemical device is a lithium-ion battery. The lithium-ion battery includes the electrode sheet in the first aspect of the present disclosure. The electrode sheet is a positive electrode sheet, and also includes a negative electrode sheet, a separator and an electrolyte.

In some implementation schemes, the electrochemical device includes the electrode sheet in the first aspect of the present disclosure. The electrode sheet is a positive electrode sheet, and also includes a negative electrode sheet, a separator and an electrolyte. The positive electrode sheet includes a positive electrode active substance layer and a positive electrode current collector. The positive electrode active substance layer includes a positive electrode active material, and the positive electrode active material includes a lithium phosphate-containing positive electrode active material.

In the above implementation scheme, preferably, the positive electrode active material includes lithium iron phosphate (LiFePO₄).

In the present disclosure, the lithium phosphate-containing positive electrode active material may be lithium iron phosphate, lithium manganese iron phosphate positive electrode material. When this type of positive electrode material is coated onto the current collector together with the insulation layer, due to contraction caused by surface tension, if conventional binders and inorganic fillers are adopted, gaps will be formed between the insulation layer and the active substance layer, causing foil exposure, which is likely to lead to contact with electrode sheets of opposite polarity, resulting in reduced safety performance. Through the design of the present disclosure, the problem of gaps formed between the active substance layer formed of lithium phosphate-containing positive electrode active material and the insulation layer may be solved, improving safety.

In the present disclosure, the lithium-ion battery is generally a prismatic hard-casing battery, a pouch battery and a columnar battery.

In the present disclosure, the lithium-ion battery may be prepared by conventional methods in the art. Taking a pouch battery as an example, the preparation method of the lithium-ion battery includes the following steps: stacking the positive electrode, separator, and negative electrode in sequence, so that the separator is between the positive electrode and negative electrode to serve the isolation function, and stacking them to obtain a bare cell; placing the bare cell into an aluminum-plastic film, drying to remove water, injecting electrolyte and sealing, then performing room temperature standing, hot and cold pressing, formation, fixture, grading and other processes to obtain the finished pouch lithium-ion battery.

### Electrode Sheet

In the electrode sheet provided in the first aspect of the present disclosure, the electrode sheet includes: a current collector; a tab, disposed on at least one end of the current collector; an active substance layer, disposed on at least one surface of the current collector; an insulation layer, the insulation layer at least partially covers an area of the at least one surface of the current collector that is not covered by the active substance layer; the insulation layer includes an inorganic filler and a binder; the binder includes a first binder and a second binder, the second binder includes fluorine-containing polymer, and the mass ratio of the first binder to the second binder is 1:(0.1-4).

### Insulation Layer

In the present disclosure, the first binder and the second binder are defined as two different types of binders. When the first binder and the second binder are each multi-ingredient composite binders, at least one ingredient type in the two multi-ingredient composite binders is different.

In some implementation schemes, the first binder includes one or more of polyamide, polyacrylonitrile, polyacrylate, polyacrylic acid, polyacrylate salt, sodium carboxymethyl cellulose, polyvinylpyrrolidone, polyvinyl ether, and polyolefin.

The polyacrylate may include polymethyl methacrylate.

In some implementation schemes, the second binder includes one or more of polyvinylidene fluoride, vinylidene fluoride-hexafluoropropylene copolymer, polytetrafluoroethylene, and polyhexafluoropropylene.

In some implementation schemes, the first binder and the second binder are both single-ingredient binders.

In a specific implementation scheme, the first binder is polyacrylic acid; the second binder is polyvinylidene fluoride.

In a specific implementation scheme, the first binder is polyolefin; the second binder is polyvinylidene fluoride.

In some implementation schemes, the mass ratio of the first binder to the second binder is 1:(1-4).

In some implementation schemes, the mass ratio of the first binder to the second binder is 1:(2-4).

In some implementation schemes, the mass ratio of the first binder to the second binder is 1:(2.5-3.5).

In some specific implementation schemes, the mass ratio of the first binder to the second binder is 1: 1, 1:2, 1:3, or 1:4.

In a specific implementation scheme, the first binder is polyacrylic acid, the second binder is polyvinylidene fluoride, and the mass ratio of the first binder to the second binder is 1:(1-4).

In a specific implementation scheme, the first binder is polyolefin, the second binder is polyvinylidene fluoride, and the mass ratio of the first binder to the second binder is 1:(2-4).

In some implementation schemes, the inorganic filler is selected from one or more of aluminum oxide, silicon dioxide, magnesium oxide, titanium oxide, hafnium dioxide, tin oxide, zirconium oxide, cerium dioxide, nickel oxide, zinc oxide, calcium oxide, boehmite, aluminum hydroxide, magnesium hydroxide, calcium hydroxide, and barium sulfate.

In an optional implementation scheme, the inorganic filler includes boehmite and/or aluminum oxide.

When the inorganic filler includes boehmite, the particle size D50 of the boehmite may be 1.3µm to 3µm, for example 1.6µm.

When the inorganic filler includes aluminum oxide, the particle size D50 of the aluminum oxide may be 0.5µm to 2µm, for example 0.6µm.

When the inorganic filler includes boehmite and aluminum oxide, the particle size D50 of the boehmite and aluminum oxide as a composite inorganic filler may be 1.3µm to 3µm, for example 1.6µm.

In an optional implementation scheme, the inorganic filler includes boehmite and aluminum oxide; the mass ratio of the boehmite to the aluminum oxide is (4-19):1.

In some implementation schemes, the insulation layer at least partially covers the tab.

In some implementation schemes, the mass percentage of the inorganic filler in the insulation layer is 70% to 90%.

In some implementation schemes, the mass percentage of the binder in the insulation layer is 10% to 30%.

In some implementation schemes, the mass ratio of the inorganic filler to the binder is (7-27):3.

In a specific implementation scheme, the first binder is polyacrylic acid; the second binder is polyvinylidene fluoride; the inorganic filler is boehmite; the mass ratio of the polyacrylic acid to the polyvinylidene fluoride is 1:3, the mass percentage of the binder in the insulation layer is 30%, and the mass percentage of the inorganic filler in the insulation layer is 70%.

In a specific implementation scheme, the first binder is polyolefin; the second binder is polyvinylidene fluoride; the inorganic filler is boehmite; the mass ratio of the polyolefin to the polyvinylidene fluoride is 1:3, the mass percentage of the binder in the insulation layer is 30%, and the mass percentage of the inorganic filler in the insulation layer is 70%.

In a specific implementation scheme, the first binder is polyacrylic acid; the second binder is polyvinylidene fluoride; the inorganic filler is boehmite; the mass ratio of the polyacrylic acid to the polyvinylidene fluoride is 1:1, the mass percentage of the binder in the insulation layer is 30%, and the mass percentage of the inorganic filler in the insulation layer is 70%.

In a specific implementation scheme, the first binder is polyacrylic acid; the second binder is polyvinylidene fluoride; the inorganic filler is aluminum oxide; the mass ratio of the polyacrylic acid to the polyvinylidene fluoride is 1:3, the mass percentage of the binder in the insulation layer is 30%, and the mass percentage of the inorganic filler in the insulation layer is 70%.

In a specific implementation scheme, the first binder is polyacrylic acid; the second binder is polyvinylidene fluoride; the mass ratio of the polyacrylic acid to the polyvinylidene fluoride is 1:4, the mass percentage of the binder in the insulation layer is 30%, the mass percentage of the inorganic filler in the insulation layer is 70%, the inorganic filler is boehmite and aluminum oxide, and the mass ratio of the boehmite to the aluminum oxide is 19:1.

In a specific implementation scheme, the first binder is polyacrylic acid; the second binder is polyvinylidene fluoride; the mass ratio of the polyacrylic acid to the polyvinylidene fluoride is 1:2, the mass percentage of the binder in the insulation layer is 30%, the mass percentage of the inorganic filler in the insulation layer is 70%, the inorganic filler is boehmite and aluminum oxide, and the mass ratio of the boehmite to the aluminum oxide is 19:1.

In a specific implementation scheme, the first binder is polyacrylic acid; the second binder is polyvinylidene fluoride; the mass ratio of the polyacrylic acid to the polyvinylidene fluoride is 1:3, the mass percentage of the binder in the insulation layer is 30%, the mass percentage of the inorganic filler in the insulation layer is 70%, the inorganic filler is boehmite and aluminum oxide, and the mass ratio of the boehmite to the aluminum oxide is 19:1.

In a specific implementation scheme, the first binder is polyacrylic acid; the second binder is polyvinylidene fluoride; the mass ratio of the polyacrylic acid to the polyvinylidene fluoride is 1:1, the mass percentage of the binder in the insulation layer is 30%, the mass percentage of the inorganic filler in the insulation layer is 70%, the inorganic filler is boehmite and aluminum oxide, and the mass ratio of the boehmite to the aluminum oxide is 19:1.

In a specific implementation scheme, the first binder is polyolefin; the second binder is polyvinylidene fluoride; the mass ratio of the polyolefin to the polyvinylidene fluoride is 1:3, the mass percentage of the binder in the insulation layer is 30%, the mass percentage of the inorganic filler in the insulation layer is 70%, the inorganic filler is boehmite and aluminum oxide, and the mass ratio of the boehmite to the aluminum oxide is 19:1.

In a specific implementation scheme, the first binder is polyolefin; the second binder is polyvinylidene fluoride; the mass ratio of the polyolefin to the polyvinylidene fluoride is 1:2, the mass percentage of the binder in the insulation layer is 30%, the mass percentage of the inorganic filler in the insulation layer is 70%, the inorganic filler is boehmite and aluminum oxide, and the mass ratio of the boehmite to the aluminum oxide is 19:1.

In a specific implementation scheme, the first binder is polyolefin; the second binder is polyvinylidene fluoride; the mass ratio of the polyolefin to the polyvinylidene fluoride is 1:4, the mass percentage of the binder in the insulation layer is 30%, the mass percentage of the inorganic filler in the insulation layer is 70%, the inorganic filler is boehmite and aluminum oxide, and the mass ratio of the boehmite to the aluminum oxide is 19:1.

In the present disclosure, the description reciting "the insulation layer at least partially covers an area of the at least one surface of the current collector that is not covered by the active substance layer" includes at least the following meaning: the insulation layer is located on at least one surface of the current collector where the active substance layer is disposed, and the insulation layer is at least partially located in the area of that surface not covered by the active substance layer.

In some implementation schemes, the insulation layer is located on two opposite surfaces of the current collector that are not covered by the active substance layer, and at least one of the color, shape or size of the insulation layer is different on the two opposite surfaces. In some batteries such as columnar batteries, due to the high winding structure design, in order to meet the bending requirements of the electrode sheet, the surface density of the inner and outer circles may be different, with the inner circle having a smaller surface density and the outer circle having a larger surface density, thus maximizing its energy density, and therefore the electrode sheet needs to distinguish between front and back sides. In such cases, coloring materials may be added to at least one insulation layer, such as inorganic bismuth vanadate and other pigments, for example, 3% of the mass of the insulation layer may be added, which makes it possible to meet the coloring requirements while also allowing CCD to identify colors and distinguish between front and back sides by color.

In some implementation schemes, the thickness of the insulation layer is 10µm to 60µm, for example 20±10µm. The thickness of the insulation layer refers to the thickness at the midpoint position between the starting point and the ending point of the insulation layer along the width direction (i.e., the thickness of the insulation layer corresponding to the middle position of the width of the insulation layer). The width direction refers to the direction extending from one side close to the active substance layer toward the tab side.

In some implementation schemes, the insulation layer is closely adjacent to the active substance layer. Here, "closely adjacent to" means that there is no spacing between the insulation layer and the active substance layer, and they do not overlap each other.

In some implementation schemes, there exists spacing between the insulation layer and the active substance layer; the spacing may be 0.01 mm to 1mm. The spacing is produced by the shrinkage of the slurry layer containing the active substance, inorganic filler and binder during the formation process of the insulation layer and the active substance layer.

In some implementation schemes, there is a partial overlap part between the insulation layer and the active substance layer, and a width of the partial overlap part may be 0.01 mm to 0.5mm, for example 0.3mm.

### Positive Electrode Sheet

In some optional implementation schemes, the electrode sheet is a positive electrode sheet, which includes: a positive electrode current collector; a positive tab, disposed on at least one end of the positive electrode current collector; a positive electrode active substance layer, disposed on at least one surface of the positive electrode current collector; an insulation layer, the insulation layer at least partially covers an area of the at least one surface of the current collector that is not covered by the active substance layer; the insulation layer includes an inorganic filler and a binder; the binder includes a first binder and a second binder, the second binder includes fluorine-containing polymer, and the mass ratio of the first binder to the second binder is 1:(2-4).

The insulation layer is as described above.

In some implementation schemes, the positive electrode current collector may be a conventional positive electrode current collector in the art. The positive electrode current collector serves as a base supporting the positive electrode active material layer, typically a metal foil with a thickness of 3 to 500 microns. There is no particular limitation on the material, as long as the material has high electrical conductivity and does not cause chemical reactions in the secondary battery system. For example, the material may be foil formed after surface treatment of nickel, titanium, aluminum, nickel, silver, stainless steel, carbon, etc. The positive electrode current collector typically has a smooth surface, but fine patterns may also be formed on the surface thereof to improve the adhesion between the positive electrode active material and the current collector. Besides foil, the positive electrode current collector may also adopt any one or a combination of various forms such as film, mesh, porous, foam, or non-woven fabric. Generally, the positive electrode current collector is aluminum foil.

In some implementation schemes, the positive electrode active substance layer includes a positive electrode active material.

The positive electrode active material may be conventional positive electrode active material for lithium-ion batteries in the art, which may be lithium-containing composite oxides, specifically, such as LiMnO₂, LiFeO₂, LiMn₂O₄, Li₂FeSiO₄, LiNi_{1/3}Co_{1/3}Mn_{1/3}O₂, LiNi₅CO₂Mn₃O₂, Li_{z}Ni_{(1-x-y})CoₓM_{y}O₂ (wherein, 0.01≤x≤0.20, 0≤y≤0.20, 0.97≤z≤1.20, M represents at least one element selected from Mn, V, Mg, Mo, Nb and Al), LiFePO₄ and Li_{z}CO(₁₋ₓ₎MₓO₂ (wherein, 0≤x≤0.1, 0.97≤z≤1.20, M represents at least one element selected from the group consisting of Mn, Ni, V, Mg, Mo, Nb and Al).

In some implementation schemes, the positive electrode active substance layer includes a positive electrode active material, and the positive electrode active material includes lithium phosphate-containing positive electrode active material.

In some implementation schemes, the positive electrode active material layer includes a positive electrode active material, and the positive electrode active material includes lithium iron phosphate.

In some implementation schemes, the positive electrode active material layer also includes a conductive agent.

There is no particular limitation on the type of the conductive agent, which is a reagent used to ensure good charge and discharge performance of the electrode. The conductive agent may be freely selected from graphite materials such as natural graphite, artificial graphite, etc., carbon black materials such as carbon black SP, acetylene black, ketjen black, channel carbon black, furnace black, lamp black, thermal cracking carbon black, etc., conductive fibers such as carbon fiber, metal fiber, etc., metal powders such as fluorinated carbon powder, aluminum powder, nickel powder and other metal powders, conductive whiskers such as zinc oxide, potassium titanate, etc., as well as conductive metal oxides such as titanium dioxide or polyphenylene derivatives.

In some implementation schemes, the positive electrode active material layer also includes a binder.

There is no particular limitation on the type of the binder, which is an ingredient that helps the bonding between the active material and the conductive agent and helps the bonding between the active material and the current collector. The binder may be freely selected from polyvinylidene fluoride, polyvinylfluoride, polyvinyl alcohol, carboxymethyl cellulose, starch, hydroxypropyl cellulose, regenerated cellulose, polyvinylpyrrolidone, polytetrafluoroethylene, polyethylene, polypropylene, ethylene-propylene-diene terpolymer, sulfonated ethylene-propylene-diene terpolymer, styrene-butadiene rubber, fluororubber and various copolymers.

In some implementation schemes, the preparation method of the positive electrode sheet includes: coating the positive electrode slurry obtained after thoroughly stirring and mixing the ingredients of the positive electrode active substance layer in a solvent onto at least one surface of the positive electrode current collector; then coating the inorganic filler slurry obtained after thoroughly stirring and mixing the ingredients of the insulation layer in a solvent onto the surface of the positive electrode current collector that is not covered by the positive electrode slurry, with no spacing between the inorganic filler slurry and the positive electrode slurry; and performing drying, cold pressing, cutting to obtain the product.

### Negative Electrode Sheet

In some optional implementation schemes, the negative electrode sheet is a conventional negative electrode sheet, that is, without the aforementioned insulation layer, the negative electrode sheet includes: a negative electrode current collector; a negative tab, disposed on at least one end of the negative electrode current collector; and a negative electrode active substance layer, disposed on at least one surface of the negative electrode current collector.

In this implementation scheme, the negative electrode may be prepared by conventional methods in the field, generally including: obtaining negative electrode slurry after thoroughly stirring and mixing the ingredients of the negative electrode active substance layer in a solvent, coating the negative electrode slurry onto the negative electrode current collector, and performing drying, cold pressing, cutting to obtain the product.

In some other optional implementation schemes, the negative electrode sheet includes: a negative electrode current collector; a negative tab, disposed on at least one end of the negative electrode current collector; a negative electrode active substance layer, disposed on at least one surface of the negative electrode current collector; an insulation layer, the insulation layer at least partially covers an area of the at least one surface of the current collector that is not covered by the active substance layer; the insulation layer includes an inorganic filler and a binder; the binder includes a first binder and a second binder, the second binder includes fluorine-containing polymer, and the mass ratio of the first binder to the second binder is 1:(2-4).

The insulation layer is as described above.

In this implementation scheme, the preparation method of the negative electrode sheet includes: coating the negative electrode slurry obtained after thoroughly stirring and mixing the ingredients of the negative electrode active substance layer in a solvent on at least one surface of the negative electrode current collector; then coating the inorganic filler slurry obtained after thoroughly stirring and mixing the ingredients of the insulation layer in a solvent on the surface of the negative electrode current collector that is not covered by the negative electrode slurry, with no spacing between the inorganic filler slurry and the negative electrode slurry; and performing drying, cold pressing, cutting to obtain the product.

In some implementation schemes, the negative electrode active material layer includes a negative electrode active material.

The negative electrode active material may be conventional negative electrode active material for lithium-ion battery in the art. The negative electrode active material for lithium-ion battery may use compounds that may reversibly intercalate and deintercalate lithium, specific examples include but are not limited to: crystalline carbon (natural graphite and artificial graphite, etc.), amorphous carbon, carbon-coated graphite and resin-coated graphite and other carbon materials, or indium oxide, silicon oxide, tin oxide, lithium titanate, zinc oxide, lithium oxide and other oxide materials, and may also be lithium metal or metal materials that can form alloys with lithium; wherein, the metal materials that can form alloys with lithium are, for example, Cu, Sn, Si, Co, Mn, Fe, Sb and Ag. Binary or ternary alloys containing these metals and lithium may also be used as negative electrode active substance. The negative electrode active substance may be used alone or in combination of two or more of the above. From the perspective of high energy density, carbon materials such as graphite may be used in combination with Si-based materials such as Si, Si alloys, Si oxides.

In some implementation schemes, the negative electrode active material includes any one of soft carbon, hard carbon, artificial graphite, natural graphite, silicon, silicon oxide compounds, silicon carbon compounds or lithium titanate, or a combination of at least two of the above.

In some implementation schemes, the negative electrode active substance layer also includes a conductive agent.

There is no particular limitation on the type of the conductive agent, which is a reagent used to ensure that the electrode possesses good charge and discharge performance. The conductive agent may be optionally selected from graphite materials such as natural graphite, artificial graphite, carbon black materials such as SP carbon black, acetylene black, ketjen black, channel carbon black, furnace black, lamp black, thermal cracking carbon black, conductive fibers such as carbon fiber, metal fiber, metal powders such as fluorinated carbon powder, aluminum powder, nickel powder and other metal powders, conductive whiskers such as zinc oxide, potassium titanate, as well as conductive metal oxides such as titanium dioxide or polyphenylene derivatives.

In some implementation schemes, the negative electrode active substance layer also includes a binder.

There is no particular limitation on the type of binder, which is an ingredient that helps the bonding between the active material and the conductive agent and helps the bonding between the active material and the current collector. The binder may be freely selected from polyvinylidene fluoride, polyvinylfluoride, polyvinyl alcohol, carboxymethyl cellulose, starch, hydroxypropyl cellulose, regenerated cellulose, polyvinylpyrrolidone, polytetrafluoroethylene, polyethylene, polypropylene, ethylene-propylene-diene terpolymer and its sulfonated products, styrene-butadiene rubber, fluororubber and various copolymers.

In some implementation schemes, the negative electrode current collector serves as a base supporting the negative electrode active material, typically a metal foil with a thickness of 3 to 500 microns. There is no particular limitation on the material, as long as the material possesses high electrical conductivity and does not produce chemical reactions in the secondary battery system. For example, the material may be foil formed after surface treatment of nickel, titanium, aluminum, nickel, silver, stainless steel, carbon, etc. The negative electrode current collector typically has a smooth surface, but fine patterns may also be formed on the surface thereof to improve the adhesion between the positive electrode active material and the current collector. Besides foil, the negative electrode current collector may also adopt any one or a combination of various forms such as film, mesh, porous, foam or non-woven fabric. Generally, the negative electrode current collector is copper foil.

### Separator

The separator disposed between the positive electrode sheet and the negative electrode sheet uses an insulation film with high ion permeability and high mechanical strength. The separator typically has a thickness of 9µm to 18µm; a pore size of 5µm to 300µm; an air permeability of 180s/100mL to 380s/100mL; a porosity of 30% to 50%. As a separator, the separator possesses chemical resistance and hydrophobicity, typically using sheets or non-woven fabrics made of substances such as: polyolefin polymers like polypropylene or polyethylene; glass fibers; or, furthermore, using the aforementioned sheets or non-woven fabrics as base films, coated with a coating layer (for example, nano aluminum oxide coating).

In a specific implementation scheme, the separator is a polypropylene film, with a thickness of 12µm, an air permeability of 230s/100mL, and a porosity of 40%.

### Electrolyte

In some implementation schemes, the electrolyte may be conventional electrolyte used in lithium-ion batteries in the field, generally including non-aqueous solvent, lithium salt and additives.

The non-aqueous solvent may be conventional non-aqueous solvent in the field, preferably ester solvent, more preferably carbonate solvent. The carbonate solvent may be selected from one or more of ethylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC) and butylene carbonate (BC).

In some implementation schemes, the non-aqueous solvent includes EMC, EC and DEC. The volume ratio of EC, EMC and DEC may be 20:20:60.

In the present disclosure, the electrolyte may also include additives.

The additives may be selected from one or more of vinylene carbonate (VC), fluoroethylene carbonate (FEC), vinyl ethylene carbonate (VEC), ethylene sulfate (DTD), ethylene sulfite, 1,3-propane sultone (PS), allyl sulfonate sultone and 1,4-butane sultone. The conventional amount of additives in the electrolyte is 1% to 4% of the electrolyte, for example 2%.

The lithium salt may be conventional lithium salt in the field, for example, at least one of LiPF₆, LiBF₄, LiN(SO₂F)₂ (abbreviated as LiFSI), LiClO₄, LiAsF₆, LiB(C₂O₄)₂ (abbreviated as LiBOB), LiBF₂(C₂O₄) (abbreviated as LiDFOB), LiN(SO₂RF)₂ and LiN(SO₂F)(SO₂RF). The concentration of the lithium salt may be conventional concentration in the field, the content of the lithium salt in the electrolyte is preferably 5% to 20%, generally 1mol/L to 2mol/L.

In the present disclosure, the preparation method of the electrolyte may be conventional method in the field, generally by mixing non-aqueous solvent, lithium salt and additives to obtain the product.

On the basis of conforming to the common knowledge in the field, the above preferred conditions may be combined freely to obtain various preferred examples of the present disclosure. The present disclosure is further illustrated by way of implementation examples, but the present disclosure is not limited to the scope of the implementation examples described. For experimental methods where specific conditions are not specified in the following implementation examples, conventional methods and conditions are used, or selections are made according to specifications of product. Unless otherwise specified, the reagents and raw materials used in the present disclosure are commercially available.

The main reagents used in the following implementation examples and comparative examples are as follows:
Polyvinylidene fluoride (PVDF) purchased from Arkema, product model HSV900;
Polyacrylic acid (PAA) purchased from Indigo, product model LA268D;
Polyolefin (PO) purchased from Daoying, product model 6100-16;
Boehmite and aluminum oxide purchased from Estone.

Examples 1 to 11 and Comparative Examples 1 to 7
The preparation method of the positive electrode sheet is as follows:
A 13 µm aluminum foil is taken as the positive electrode current collector, with a positive tab disposed on one end of the aluminum foil, and the positive electrode slurry is uniformly coated on one surface of the aluminum foil. The inorganic filler slurry is coated in the area on the same surface that is not covered by the positive electrode slurry, where there is no spacing between the inorganic filler slurry and the positive electrode slurry, and the inorganic filler slurry is at least partially located on the positive tab. Then the aluminum foil is dried at room temperature before be transferred to an oven to dry at 100°C for 6 hours, and then the positive electrode sheet is obtained through cold pressing and cutting. The positive electrode slurry forms the positive electrode active substance layer, and the inorganic filler slurry forms the insulation layer, where the mass ratio of the inorganic filler to the binder in the insulation layer is 7:3 (the mass percentage of the inorganic filler in the insulation layer is 70%, and the mass percentage of the binder in the insulation layer is 30%).

The preparation method of the positive electrode slurry is as follows: the positive electrode active material LiNi_{0.8}Co_{0.1}Mn₀₁O₂(NCM811), the binder PVDF and the conductive agent acetylene black are mixed according to a mass ratio of 98:1:1 (a total of 100 mass fraction), and 82 mass fraction of NMP is added, then a vacuum mixer is used for stirring until the positive electrode slurry appears homogeneous and transparent to obtain the positive electrode slurry.

The preparation method of the inorganic filler slurry is as follows: 14 mass fraction of inorganic filler and 6 mass fraction of binder (first binder and second binder) are put in a double planetary mixer for mixing, the revolution speed of the stirring paddle is set at 25rpm, the rotation speed of the dispersion disc is set at 300rpm, and stirring is performed for 30min under conditions of temperature 25±5°C and humidity ≤10%; then NMP is added until the required viscosity (suitable viscosity range is 1000MPa·s to 8000MPa·s) is satisfied, the revolution speed of the stirring paddle is set at 25rpm, the rotation speed of the dispersion disc is set at 3000rpm, and stirring is performed for 240min under conditions of temperature 25±5°C and humidity ≤10% to form the inorganic filler slurry.

In the positive electrode sheets obtained in Examples 1 to 11 and Comparative Examples 1 to 7, there is no spacing between the insulation layer and the active substance layer, and they do not overlap each other.

### Example 12

The only difference between this example and Example 7 is that the insulation layer and the positive electrode active substance layer in the obtained positive electrode sheet are partially overlapped, with an overlap width of 0.3mm, while all other conditions remain consistent with Example 7.

### Example 13

This example adopts LiFePO₄ as the positive electrode material, and there is a spacing of 1mm between the insulation layer and the positive electrode active substance layer in the obtained positive electrode sheet, while all other conditions remain consistent with Example 7.

The relevant parameters such as the types and contents of ingredients of the binder and inorganic filler in the insulation layer of the positive electrode sheets in Examples 1 to 13 and Comparative Examples 1 to 7 are shown in Table 1 and Table 2.

The inorganic filler in Examples 1 to 4 and Comparative Examples 1 to 4 adopts a single inorganic filler (boehmite or aluminum oxide), and the specific parameters of the obtained positive electrode sheets are shown in Table 1. The inorganic filler in Examples 5 to 13 and Comparative Examples 5 to 7 adopts composite inorganic fillers (boehmite and aluminum oxide), and the specific parameters of the obtained positive electrode sheets are shown in Table 2.

### Example 14: Preparation of Lithium-Ion Battery

### (1) Preparation of the negative electrode sheet:

The negative electrode active material graphite, conductive agent acetylene black, thickener CMC, and binder SBR are mixed in a mass ratio of 97:1:1:1 (a total of 100 mass fractions), then 82 mass fractions of deionized water are added and mixed in a vacuum mixer to obtain negative electrode slurry. The negative electrode slurry is uniformly coated on an 8µm copper foil, dried at room temperature and transferred to an oven for drying, and then subjected to cold pressing and cutting to obtain the negative electrode sheet.

### (2) Preparation of the electrolyte:

The organic solvent is a mixture of ethylene carbonate (EC), ethyl methyl carbonate (EMC), and diethyl carbonate (DEC), wherein the volume ratio of EC, EMC, and DEC is 20:20:60. In an argon atmosphere glove box with water content <10ppm, thoroughly dried lithium salt (LiPF₆) is dissolved in the above organic solvent, and after thorough mixing, the electrolyte is obtained, wherein the concentration of LiPF₆ is 1mol/L.

### (3) Separator:

A polypropylene film is used as the separator, with a thickness of 12µm, an air permeability of 230s/100mL, and a porosity of 40%.

### (4) Preparation of the lithium-ion battery:

The positive electrode sheets, separators, and negative electrode sheets from Examples 1 to 13 and Comparative Examples 1 to 7 are stacked in sequence, with the separator positioned between the positive and negative electrode sheets to serve as isolation. Then they are wrapped with aluminum-plastic film, transferred to a vacuum oven at 120°C for drying, injected with 3.0 g/Ah of electrolyte, and sealed. After room temperature standing, hot and cold pressing, formation, fixture, and capacity sorting processes, 1 Ah pouch batteries (i.e., lithium-ion batteries) are finally prepared. The formation included the following steps: after injecting the electrolyte, maintaining a hot pressing environment of 0.1 MPa, charging at 0.02 C for 17 min at 45°C in a standing state, standing for 5 min, then charging at 0.02 C to 0.3 Ah, after which the gas bag is cut off and vacuum packaged, followed by room temperature standing for 48 h, thereby completing the formation of the electrolyte.

### Effect Example 1: Testing of Adhesion of Insulation Layer

The inorganic filler slurry from Examples 1 to 13 and Comparative Examples 1 to 7 is coated on aluminum foil current collector, dried, and cut to a size of 20mm×100mm. One side to be tested is attached to a stainless steel plate with double-sided tape and pressed with a roller to ensure complete adhesion with the electrode sheet. One end of the stainless steel plate is fixed to the lower fixture of a tensile machine, the terminal end of the sample is bent 90° and fixed to the upper fixture, and the stretching speed is 50 mm/min. The test is stopped after the stainless steel plate is separated from the current collector containing the inorganic filler slurry, and the adhesion is recorded.

### Effect Example 2: Test of Resistance to Electrolyte of Insulation Layer

The inorganic filler slurry used in Examples 1 to 13 and Comparative Examples 1 to 17 is coated on aluminum foil current collector, dried, and cut to a size of 20mm×100mm, soaked in electrolyte, and stored in an oven at 60°C for 9 days before removal. After drying, one side to be tested is attached to a stainless steel plate with double-sided tape and pressed with a roller to ensure complete adhesion with the electrode sheet. One end of the stainless steel plate is fixed to the lower fixture of a tensile machine, the terminal end of the sample is bent 90° and fixed to the upper fixture, and the stretching speed is 50mm/min. The test is stopped after the stainless steel plate is separated from the current collector containing the inorganic filler slurry, and the adhesion is recorded as the peel strength of the sample after soaking in electrolyte at 60°C with a 90° angle. A peel strength of 0 indicates that separation areas between the insulation layer and the current collector could be observed before testing, and the above test is not conducted.

### Effect Example 3: Flexibility Test

Referring to the test method in GB/T6742, a columnar bending tester (BEVS1603) is used to test the flexibility of the electrode sheets. When the maximum axial diameter causing damage to the active substance layer and insulation layer is less than 2mm, the flexibility of the electrode sheet is excellent; when the maximum axial diameter causing damage to the active substance layer and insulation layer is less than 5mm, the flexibility of the positive electrode sheet is good; when the maximum axial diameter causing damage to the active substance layer and insulation layer is greater than 5mm, the flexibility of the positive electrode sheet is poor.

### Effect Example 4: Cost Estimation for Insulation Layer

The width of the insulation layer is uniformly calculated as 9mm, and the price per kilometer of the insulation layer is calculated based on the minimum thickness achievable for each implementation scheme.

The test results of Effect Examples 1 to 4 are shown in Table 1 and Table 2.

**Table 1**

| Number | Example 1 | Example 2 | Example 3 | Example 4 | Comparative Example 1 | Comparative Example 2 | Comparative Example 3 | Comparative Example 4 |
|---|---|---|---|---|---|---|---|---|
| First binder | PAA | PO | PAA | PAA | PAA | PAA | PO | / |
| Second binder | PVDF | PVDF | PVDF | PVDF | PVDF | / | / | PVDF |
| Mass ratio of first binder to second binder | 1:3 | 1:3 | 1:1 | 1:3 | 1:5 | / | / | / |
| Type of inorganic filler | boehmite | boehmite | boehmite | aluminum oxide | boehmite | boehmite | boehmite | boehmite |
| Particle size D50 of inorganic filler / µm | 1.6 | 1.6 | 1.6 | 0.6 | 1.6 | 1.6 | 1.6 | 1.6 |
| Thickness of insulation layer / µm | 20±10 | 20±10 | 20±10 | 20±10 | 20±10 | 30±10 | 20±10 | 20±10 |
| Adhesion of insulation layer /(N/m) | 45 | 78 | 85 | 40 | 10 | 195 | 260 | 5 |
| Peel strength of insulation layer after soaking in electrolyte at 60°C with a 90° angle / (N/m) | 6 | 2 | 16 | 10 | 0 | 60 | 0 | 0 |
| Flexibility | excellent | excellent | good | good | excellent | poor | excellent | good |
| Cost of insulation layer /(yuan/km) | 18.7 | 21.9 | 22.2 | 29.3 | 17 | 41.3 | 52.9 | 15 |

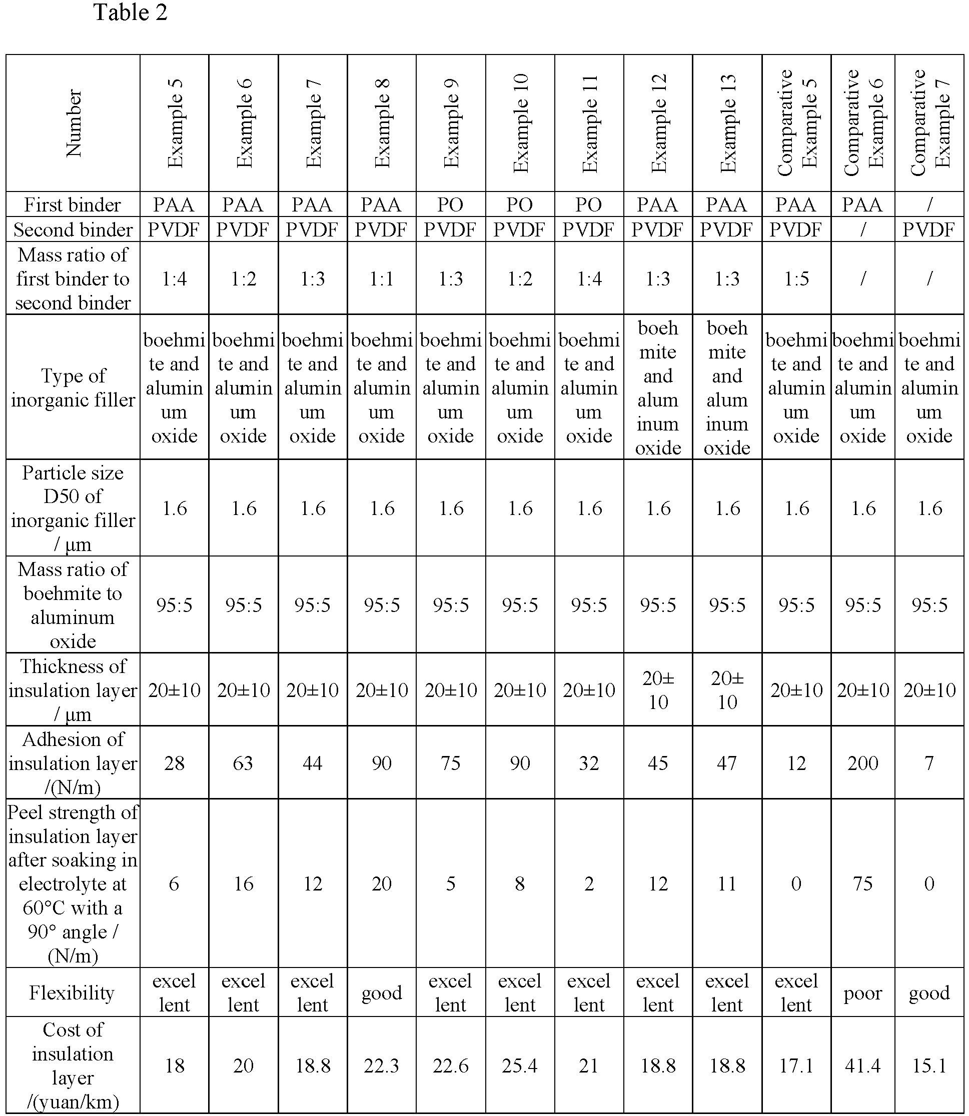

As shown in Table 1 and Table 2, the insulation layer in the examples of the present disclosure adopts two different binders including fluorine-containing polymer in a specific mass ratio, and the obtained electrode sheet has excellent comprehensive performance. The obtained electrode sheet can simultaneously satisfy the requirements of good adhesion of the insulation layer (adhesion greater than 20N/m), resistance to electrolyte (the peel strength at a 90° peel angle not less than 2N after sokaing in electrolyte at 60°C), and excellent flexibility of the electrode sheet, while the preparation cost of the insulation layer is relatively low (cost less than 30 yuan/km).

According to Table 1, when a single inorganic filler is adopted, using PAA alone (Comparative Example 2) results in an insulation layer with high adhesion and good resistance to electrolyte, but the flexibility is significantly worse and the cost is higher; using PVDF alone (Comparative Example 4) results in an insulation layer with high adhesion and excellent flexibility, but the resistance to electrolyte deteriorates and the cost increases significantly; using PO alone (Comparative Example 3) results in an insulation layer with good flexibility and lower cost, but the adhesion decreases substantially and the resistance to electrolyte also decreases significantly.

Even when using two different types of binders in combination, if the mass ratio is not within the range specified in the present disclosure, the effect of the present disclosure cannot be achieved. Comparative Example 1, based on Example 1, only changed the mass ratio of PAA and PVDF, specifically with excessive PVDF, resulting in a substantial decrease in the adhesion of the insulation layer and significantly worse resistance to electrolyte.

According to Table 2, when using composite inorganic fillers, the situation is similar to using a single inorganic filler. Using PAA alone (Comparative Example 6) results in an insulation layer with high adhesion and good resistance to electrolyte, but the flexibility is significantly worse and the cost is higher; using PVDF alone (Comparative Example 7) results in an insulation layer with good flexibility and low cost, but the adhesion deteriorates significantly and the resistance to electrolyte also decreases significantly.

Similarly, even when using a binder composed of two different types of binders in combination, if the mass ratio is not within the range specified in the present disclosure, the excellent comprehensive performance of the obtained electrode sheet cannot be guaranteed. Based on Example 7, Comparative Example 5 only changed the mass ratio of PAA and PVDF, specifically with excessive PVDF, resulting in significantly reduced adhesion of the obtained insulation layer and significantly decreased resistance to electrolyte.

In addition, using composite inorganic fillers shows some advantages compared to using a single inorganic filler. Comparing Example 7 with Example 4, Example 7 uses two inorganic fillers, boehmite and aluminum oxide, while Example 4 only uses aluminum oxide. The results show that the insulation layer in Example 7 has higher adhesion, better resistance to electrolyte, superior flexibility, and significantly lower cost, with Example 7 being only 64% of the cost of Example 4. Compared with Example 1 which uses boehmite alone, although Example 7 has similar results in terms of adhesion, flexibility and cost, Example 7 achieves significant improvement in resistance to electrolyte, with doubled peel strength of insulation layer after soaking in electrolyte at 60°C with a 90° angle.

The insulation layer plays a crucial role in lithium-ion batteries, mainly reflected in the following aspects: (1) Prevention of short circuits: The insulation layer blocks direct contact between the electrode sheet and other conductive components, prevents short circuits, ensures normal operation of the battery, and prevents battery failures caused by internal short circuits; (2) Protection of the current collector: The insulation layer covers the surface of the current collector, preventing direct contact and corrosion by the electrolyte, extending the service life of the current collector, and improving the overall life of the battery; (3) Reduction and isolation of burrs: The insulation layer may reduce burrs generated during the die-cutting process, and block metal burrs that may be generated during the manufacturing process, preventing them from piercing the separator and causing short circuits, reducing the risk of internal short circuits, and improving safety performance of the battery; (4) Reduction shedding of active substance: The insulation coating may prevent the shedding of edge materials of the active substance through overlap with the active material, improve the quality of the electrode sheet, and ensure the stability and consistency of the manufacturing process.

If the insulation layer has poor adhesion or poor resistance electrolyte, the insulation layer may fail during battery cycling, leading to the following problems:
(1) Increased risk of short circuits: If the insulation layer provides inadequate coverage or is peeled off, the exposed current collector may directly contact with the electrolyte or other electrode materials, causing short circuits, which leads to battery performance degradation and, in severe cases, may cause battery fire or explosion.
(2) Corrosion of current collector: The exposed current collector will be directly exposed to the electrolyte, resulting in chemical corrosion. The performance of the current collector decreases, the internal resistance of the battery increases, affecting the battery life and capacity.
(3) Risk of burr penetration: If the insulation layer cannot effectively isolate burrs, the burrs may pierce through the separator, causing short circuits between the positive and negative electrodes. Internal short circuits in the battery may trigger thermal runaway, resulting in battery swelling, heating, or even explosion, posing serious safety hazards.
(4) Shedding of active substance at edges: Failure of the insulation layer may lead to more burrs during the die-cutting process and cause shedding of materials at the edges of the electrode sheet. The quality of the electrode sheet decreases, the manufacturing process becomes unstable, which may cause internal short circuits and inconsistent battery performance, affecting the overall reliability and safety performance of the battery.

Therefore, ensuring the integrity and sufficient coverage of the insulation layer is a key factor in ensuring the performance and safety of lithium-ion batteries. The insulation layer of the present disclosure adopts two kinds of binders with different mass ratios, which makes the insulation layer in the electrode sheet have good adhesion, excellent resistance to electrolyte, and the electrode sheet has excellent flexibility, which can reduce the impact on the electrode sheet during processing and the influence of the electrolyte during battery cycling; lithium-ion batteries using the electrode sheet of the present disclosure have good safety performance. In addition, the electrode sheet of the present disclosure has low preparation cost and can be widely applied to industrial production.

Although specific implementation schemes of the present disclosure have been described above, those skilled in the art should understand that this is only exemplary, and the scope of protection of the present disclosure is limited by the appended claims. Those skilled in the art may make various changes or modifications to these implementation schemes without departing from the principle and essence of the present disclosure, but these changes and modifications all fall within the scope to be protected by the present disclosure.

## Claims

1. An electrode sheet, comprising:
a current collector;
a tab, disposed on at least one end of the current collector;
an active substance layer, disposed on at least one surface of the current collector;
an insulation layer, wherein the insulation layer at least partially covers an area of the at least one surface of the current collector that is not covered by the active substance layer;
wherein the insulation layer comprises an inorganic filler and a binder, the binder comprises a first binder and a second binder, the second binder comprises a fluorine-containing polymer, and a mass ratio of the first binder to the second binder is 1:(0.1-4).

2. The electrode sheet according to claim 1, wherein the mass ratio of the first binder to the second binder is 1:(1-4).

3. The electrode sheet according to claim 1, wherein the binder satisfies one or both of the following conditions (a)-(b):
(a) the first binder comprises one or more of polyamide, polyacrylonitrile, polyacrylate, polyacrylic acid, polyacrylate salt, sodium carboxymethyl cellulose, polyvinylpyrrolidone, polyvinyl ether, and polyolefin;
(b) the second binder comprises one or more of polyvinylidene fluoride, vinylidene fluoride-hexafluoropropylene copolymer, polytetrafluoroethylene, and polyhexafluoropropylene.

4. The electrode sheet according to claim 3, wherein the first binder is polyacrylic acid, the second binder is polyvinylidene fluoride, the mass ratio of the first binder to the second binder is 1:(1-4); or,
the first binder is polyolefin, the second binder is polyvinylidene fluoride, the mass ratio of the first binder to the second binder is 1:(2-4).

5. The electrode sheet according to claim 1, wherein the inorganic filler is selected from one or more of aluminum oxide, silicon dioxide, magnesium oxide, titanium oxide, hafnium dioxide, tin oxide, zirconium oxide, cerium dioxide, nickel oxide, zinc oxide, calcium oxide, boehmite, aluminum hydroxide, magnesium hydroxide, calcium hydroxide, and barium sulfate.

6. The electrode sheet according to claim 5, wherein the inorganic filler comprises boehmite and aluminum oxide, and a mass ratio of the boehmite to the aluminum oxide is (4-19): 1.

7. The electrode sheet according to claim 1, wherein the electrode sheet satisfies one or more of the following conditions (c)-(e):
(c) the inorganic filler accounts for 70% to 90% mass percentage of the insulation layer;
(d) the binder accounts for 10% to 30% mass percentage of the insulation layer;
(e) a mass ratio of the inorganic filler to the binder is (7-27):3.

8. The electrode sheet according to claim 1, wherein the electrode sheet satisfies any one of the following conditions (f)-(j):
(f) a thickness of the insulation layer is 10µm to 60µm;
(g) a spacing is between the insulation layer and the active substance layer, and the spacing is between 0.01mm and 1mm;
(h) there is a partial overlap part between the insulation layer and the active substance layer, and a width of the partial overlap part is between 0.01mm and 0.5mm;
(i) the insulation layer is located on two opposite surfaces of the current collector that are not covered by the active substance layer, and at least one of color, shape or size of the insulation layer is different on the two opposite surfaces;
(j) the insulation layer at least partially covers the tab.

9. An electrochemical device, comprising the electrode sheet according to any one of claims 1 to claim 8, wherein the electrode sheet is a positive electrode sheet, and further comprising a negative electrode sheet, a separator and an electrolyte, wherein the positive electrode sheet comprises a positive electrode active substance layer and a positive electrode current collector, the positive electrode active substance layer comprises a positive electrode active material, the positive electrode active material comprises a lithium phosphate-containing positive electrode active material.

10. The electrochemical device according to claim 9, wherein the positive electrode active material comprises lithium iron phosphate.

11. An electronic device, comprising the electrochemical device according to claim 9 or claim 10.
